# EUROPEAN PATENT APPLICATION

(11) **EP 3 739 910 A1**
(43) Date of publication of application: **18.11.2020**
(21) Application number: 18906320.9
(22) Date of filing: 24.12.2018
(51) Int. Cl.: H04W 4/02

(54) **METHOD AND APPARATUS FOR DETERMINING LOCATION INFORMATION**

(30) Priority: 13.02.2018 CN 201810150381
(71) Applicant: Huawei Technologies Co. Ltd., Guangdong 518129 (CN)
(72) Inventor: ZHU, Haoren, Shenzhen, Guangdong 518129 (CN); LU, Wei, Shenzhen, Guangdong 518129 (CN); ZHU, Hualin, Shenzhen, Guangdong 518129 (CN)
(74) Representative: Maiwald Patent- und Rechtsanwaltsgesellschaft mbH
(86) International application number: PCT/CN2018/123221
(87) International publication number: WO 2019/157864

(57) **Abstract**

This application provides a method for determining location information and an apparatus. The method includes: sending, by a terminal device, first location information to a first core network element via a non-3GPP access network element, where the first location information is used by the first core network element to determine second location information that is of the terminal device and that is corresponding to a 3GPP network; and receiving, by the terminal device via the non-3GPP access network element, the second location information sent by the first core network element.

## Description

This application claims priority to Chinese Patent Application No. 201810150381.X, filed with the Chinese Patent Office on February 13, 2018 and entitled "METHOD FOR DETERMINING LOCATION INFORMATION AND APPARATUS ", which is incorporated herein by reference in its entirety.

### TECHNICAL FIELD

This application relates to the field of communications technologies, and in particular, to a method for determining location information and an apparatus.

### BACKGROUND

A local area data network (Local Area Data Network, LADN) is a dedicated data network. The LADN not only has a data network name (Data Network Name, DNN), but also has a specific service area (Service Area, SA). The DNN and the SA are collectively referred as availability information of the LADN. A terminal device can access the LADN by using a protocol data unit (Protocol Data Unit, PDU) session only when the terminal device is located in the SA of the LADN and an access condition is met.

Currently, for a scenario in which the terminal device accesses the LADN by using a non-third-generation partnership project (3rd Generation Partnership Project, 3GPP) access technology, no corresponding solution is provided in the prior art.

### SUMMARY

This application provides a method for determining location information and an apparatus, to determine location information of a terminal device, so that the terminal device accesses an LADN by using a non-3GPP access technology.

To achieve the foregoing objective, the following technical solutions are used in this application.

According to a first aspect, this application provides a method for determining location information, including: sending, by a terminal device, first location information to a first core network element via a non-3GPP access network element, where the first location information is used by the first core network element to determine second location information that is of the terminal device and that is corresponding to a 3GPP network; and receiving, by the terminal device via the non-3GPP access network element, the second location information sent by the first core network element. In this way, the terminal device may determine, based on the second location information, whether the terminal device is in a service area of the LADN, and then access the LADN.

In a possible design, the terminal device receives LADN information that corresponds to the terminal device and that is sent by the first core network element. Then the terminal device determines a target LADN based on the second location information and the LADN information.

In a possible design, after receiving the second location information, the terminal device determines a first non-3GPP access network gateway based on the second location information. The terminal device accesses the LADN via the first non-3GPP access network gateway.

In a possible design, the sending, by a terminal device, first location information to a first core network element via a non-3GPP access network element includes: sending, by the terminal device, the first location information to the first core network element via the non-3GPP access network element before access authentication is completed.

In a possible design, the terminal device sends the first location information to the first core network element via the non-3GPP access network element and a second non-3GPP access network gateway before access authentication is completed. Then the terminal device receives, via the non-3GPP access network element and the second non-3GPP access network gateway, the second location information sent by the first core network element.

In a possible design, the terminal device sends the first location information to the first core network element via the non-3GPP access network element and a second core network element before access authentication is completed. Then the terminal device receives, via the non-3GPP access network element and the second core network element, the second location information sent by the first core network element.

In a possible design, the sending, by a terminal device, first location information to a first core network element via a non-3GPP access network element includes: sending, by the terminal device, the first location information to the first core network element via the non-3GPP access network element after access authentication is completed.

In a possible design, the terminal sends the first location information to the first core network element via the non-3GPP access network element and a second non-3GPP access network gateway after access authentication is completed. Then the terminal device receives, via the non-3GPP access network element and the second non-3GPP access network gateway, the second location information sent by the first core network element.

In a possible design, the terminal device sends first non-access stratum (Non-access stratum, NAS) signaling to the first core network element via the non-3GPP access network element and the second non-3GPP access network gateway after access authentication is completed, where the first NAS signaling carries the first location information. Then the terminal device receives, via the non-3GPP access network element and the second non-3GPP access network gateway, second NAS signaling sent by the first core network element, where the second NAS signaling carries the second location information.

In a possible design, the first location information includes at least one of the following: wireless local area network identification information, longitude and latitude coordinate information, information about an internet protocol (Internet Protocol, IP) address of the terminal device, and wireless local area network address information. The second location information includes tracking area identity (Tracking Area identity, TAI) information and/or cell identity (Cell identity, CI) information. The LADN information includes a list of tracking areas, and the list of tracking areas includes at least one piece of TAI information.

According to a second aspect, this application provides a method for determining location information, including: receiving, by a first core network element, first location information of a terminal device via a non-3GPP access network element; determining, by the first core network element based on the first location information, second location information that is of the terminal device and that is corresponding to a 3GPP network; and sending, by the first core network element, the second location information to the terminal device via the non-3GPP access network element. In this way, the terminal device may determine, based on the second location information, whether the terminal device is in a service area of the LADN, and then access the LADN.

In a possible design, the determining, by the first core network element based on the first location information, second location information that is of the terminal device and that is corresponding to a 3GPP network includes: determining, by the first core network element based on the first location information and a preset correspondence between the first location information and the second location information, the second location information that is of the terminal device and that is corresponding to the 3GPP network.

In a possible design, the determining, by the first core network element based on the first location information, second location information that is of a terminal device and that is corresponding to a 3GPP network includes: sending, by the first core network element, the first location information to a third core network element. The first core network element receives the second location information sent by the third core network element.

In a possible design, the first core network element sends LADN information corresponding to the terminal device, to the terminal device, where the LADN information is used by the terminal device to determine a target LADN.

In a possible design, the receiving, by a first core network element, first location information of a terminal device via a non-3GPP access network element includes: receiving, by the first core network element, the first location information of the terminal device via the non-3GPP access network element before the terminal device completes access authentication.

In a possible design, the first core network element receives the first location information of the terminal device via the non-3GPP access network element and a non-3GPP access network gateway before the terminal device completes access authentication. The first core network element sends the second location information to the terminal device via the non-3GPP access network element and the non-3GPP access network gateway.

In a possible design, the first core network element receives the first location information of the terminal device via the non-3GPP access network element and a second core network element before the terminal device completes access authentication. The first core network element sends the second location information to the terminal device via the non-3GPP access network element and the second core network element.

In a possible design, the determining, by the first core network element based on the first location information, second location information that is of the terminal device and that is corresponding to a 3GPP network includes: receiving, by the first core network element, the first location information of the terminal device via the non-3GPP access network element after the terminal device completes access authentication.

In a possible design, the first core network element receives the first location information of the terminal device via the non-3GPP access network element and a non-3GPP access network gateway after the terminal device completes access authentication. Then the first core network element sends the second location information to the terminal device via the non-3GPP access network element and the non-3GPP access network gateway.

In a possible design, the first core network element receives first NAS signaling via the non-3GPP access network element and the non-3GPP access network gateway after the terminal device completes access authentication, where the first NAS signaling carries the first location information of the terminal device. Then the first core network element sends second NAS signaling to the terminal device via the non-3GPP access network element and the non-3GPP access network gateway, where the second NAS signaling carries the second location information.

In a possible design, the first location information includes at least one of the following: wireless local area network identification information, longitude and latitude coordinate information, information about an IP address of the terminal device, and wireless local area network address information. The second location information includes: TAI information and/or CI information. The LADN information includes a list of tracking areas, and the list of tracking areas includes at least one piece of TAI information.

According to a third aspect, this application provides a method for determining location information, including: receiving, by a terminal device via a non-3GPP access network element, location information that is sent by a first core network element and that is of a terminal device corresponding to a 3GPP network; receiving, by the terminal device, LADN information that corresponds to the terminal device and that is sent by the first core network element; and determining, by the terminal device, a target LADN based on the location information that is of the terminal device and that is corresponding to the 3GPP network and the LADN information.

In a possible design, before receiving, via the non-3GPP access network element, the location information that is of the terminal device corresponding to the 3GPP network and that is sent by the first core network element, the terminal device sends, to the first core network element via the non-3GPP access network element, location information that is of the terminal device and that is corresponding to a non-3GPP network. The location information that is of the terminal device and that is corresponding to the non-3GPP network is used by the first core network element to determine the location information that is of the terminal device and that is corresponding to the 3GPP network.

In a possible design, the terminal device determines the non-3GPP access network gateway based on the location information that is of the terminal device and that is corresponding to the 3GPP network. The terminal device accesses the target LADN via the non-3GPP access network gateway.

In a possible design, the location information that is of the terminal device and that is corresponding to the 3GPP network includes TAI information and/or CI information. The LADN information includes a list of tracking areas, and the list of tracking areas includes at least one piece of TAI information.

For another possible design of the third aspect, refer to content of the first aspect. Details are not described herein again.

According to a fourth aspect, this application provides a method for determining location information, including: sending, by a first core network element via a non-3GPP access network element, location information that is of a terminal device and that is corresponding to a 3GPP network, to the terminal device. Then the first core network element sends LADN information corresponding to the terminal device, to the terminal device, so that the terminal device determines a target LADN based on the location information and the LADN information.

In a possible design, before sending, via a non-3GPP access network element, location information that is of a terminal device and that is corresponding to a 3GPP network, to the terminal device, the first core network element receives the location information that is of the terminal device corresponding to the non-3GPP network and that is sent by the non-3GPP access network element. The first core network element determines, based on the location information that is of the terminal device and that is corresponding to the non-3GPP network, the location information that is of the terminal device and that is corresponding to the 3GPP network.

In a possible design, before sending, via a non-3GPP access network element, location information that is of a terminal device and that is corresponding to a 3GPP network, to the terminal device, the first core network element receives, via the non-3 GPP access network element, the location information that is of the terminal device corresponding to the non-3GPP network and that is sent by the terminal device. The first core network element determines, based on the location information that is of the terminal device and that is corresponding to the non-3GPP network, the location information that is of the terminal device and that is corresponding to the 3GPP network.

In a possible design, that the first core network element determines, based on the location information that is of the terminal device and that is corresponding to the non-3GPP network, location information that is of the terminal device and that is corresponding to a 3GPP network includes: sending, by the first core network element, the location information that is of the terminal device and that is corresponding to the non-3GPP network, to a third core network element; and receiving, by the first core network element, the location information that is of the terminal device, that is corresponding to the 3GPP network, and that is sent by the third core network element.

In a possible design, that the first core network element determines, based on the location information that is of the terminal device and that is corresponding to the non-3GPP network, location information that is of the terminal device and that is corresponding to a 3GPP network includes: determining, by the first core network element based on the location information that is of the terminal device and that is corresponding to the non-3GPP network and a preset correspondence between the location information of the non-3GPP network and the location information of the 3GPP network, to determine the location information that is of the terminal device and that is corresponding to the 3GPP network.

In a possible design, the location information that is of the terminal device and that is corresponding to the 3GPP network includes TAI information and/or CI information. The LADN information includes a list of tracking areas, and the list of tracking areas includes at least one piece of TAI information.

For another possible design of the fourth aspect, refer to content of the second aspect. Details are not described herein again.

According to a fifth aspect, this application provides a method for determining location information, including: receiving, by a terminal device via a non-3GPP access network element, LADN information that corresponds to the terminal device and that is sent by a core network element, where the LADN information is information about an LADN in a non-3GPP network; and determining, by the terminal device, a target LADN based on the location information that is of the terminal device and that is corresponding to the non-3GPP network and the LADN information.

In a possible design, the terminal device determines a non-3GPP access network gateway based on the location information that is of the terminal device and that is corresponding to the non-3GPP network. Then the terminal device accesses the target LADN via the non-3GPP access network gateway.

In a possible design, the location information that is of the terminal device and that is corresponding to the non-3GPP network includes at least one of the following: wireless local area network identification information, longitude and latitude coordinate information, information about an IP address of the terminal device, and wireless local area network address information.

In a possible design, the LADN information includes at least one of the following: a wireless local area network identifier list, a longitude and latitude coordinate list, a list of IP addresses, and a wireless local area network address list. The wireless local area network identifier list includes at least one piece of wireless local area network identification information. The longitude and latitude coordinate list includes at least one piece of longitude and latitude coordinate information. The list of IP addresses includes at least one piece of information about an IP address. The wireless local area network address list includes at least one piece of wireless local area network address information.

According to a sixth aspect, this application provides a method for determining location information, including: sending, by a core network element via a non-3GPP access network element, LADN information corresponding to a terminal device, to the terminal device, so that the terminal device determines a target LADN based on the location information of the terminal device in a non-3GPP network and the LADN information. The LADN information is information about an LADN in the non-3GPP network.

In a possible design, the location information that is of the terminal device and that is corresponding to the non-3GPP network includes at least one of the following: wireless local area network identification information, longitude and latitude coordinate information, information about an IP address of the terminal device, and wireless local area network address information.

In a possible design, the LADN information includes at least one of the following: a wireless local area network identifier list, a longitude and latitude coordinate list, a list of IP addresses, and a wireless local area network address list. The wireless local area network identifier list includes at least one piece of wireless local area network identification information. The longitude and latitude coordinate list includes at least one piece of longitude and latitude coordinate information. The list of IP addresses includes at least one piece of information about an IP address. The wireless local area network address list includes at least one piece of wireless local area network address information.

According to a seventh aspect, this application provides a method for determining location information, including: receiving, by a terminal device via a 3GPP access network element when the terminal device accesses a core network via both the 3GPP access network element and a non-3GPP access network element, location information that is of the terminal device corresponding to a 3GPP network and the LADN information corresponding to the terminal device that are sent by a core network element; and accessing, by the terminal device, a target LADN via the non-3GPP access network element, and the target LADN is determined by the terminal device based on the location information that is of the terminal device and that is corresponding to the 3GPP network and the LADN information.

In a possible design, the terminal device determines a non-3GPP access network gateway based on the location information that is of the terminal device and that is corresponding to the 3GPP network. The terminal device accesses the target LADN via the non-3GPP access network element and the non-3GPP access network element.

In a possible design, the location information that is of the terminal device and that is corresponding to the 3GPP network includes TAI information and/or CI information. The LADN information includes a list of tracking areas, and the list of tracking areas includes at least one piece of TAI information.

According to an eighth aspect, this application provides a method for determining location information, including: sending, by a core network element via a 3GPP access network element when a terminal device accesses a core network via both the 3GPP access network element and a non-3GPP access network element, location information that is of the terminal device and corresponding to a 3GPP network and LADN information corresponding to the terminal device, to the terminal device, so that the terminal device accesses a target LADN via the non-3GPP access network element. The target LADN is determined by the terminal device based on the location information that is of the terminal device and that is corresponding to the 3GPP network and the LADN information.

In a possible design, the location information that is of the terminal device and that is corresponding to the 3GPP network includes TAI information and/or CI information. The LADN information includes a list of tracking areas, and the list of tracking areas includes at least one piece of TAI information.

According to a ninth aspect, a terminal device is provided. The terminal device has a function of implementing the method according to any one of the first aspect, the third aspect, the fifth aspect, or the seventh aspect. The function may be implemented by using hardware, or may be implemented by hardware executing corresponding software. The hardware or the software includes one or more modules corresponding to the functions.

According to a tenth aspect, a terminal device is provided, including a processor and a memory. The memory is configured to store a computer-executable instruction. When the terminal device runs, the processor executes the computer-executable instruction stored in the memory, so that the terminal device performs the method for determining location information according to any one of the first aspect, the third aspect, the fifth aspect, or the seventh aspect.

According to an eleventh aspect, a terminal device is provided, including a processor. The processor is configured to be coupled to a memory, and after reading an instruction in the memory, perform, according to the instruction, the method for determining location information according to any one of the first aspect, the third aspect, the fifth aspect, or the seventh aspect.

According to a twelfth aspect, a computer-readable storage medium is provided. The computer-readable storage medium stores an instruction, and when the instruction runs on a computer, the computer is enabled to perform the method for determining location information according to any one of the first aspect, the third aspect, the fifth aspect, or the seventh aspect.

According to a thirteenth aspect, a computer program product including an instruction is provided. When the computer program product runs on a computer, the computer is enabled to perform the method for determining location information according to any one of the first aspect, the third aspect, the fifth aspect, or the seventh aspect.

According to a fourteenth aspect, a chip system is provided. The chip system includes a processor, configured to support a terminal device in implementing a function of the method according to any one of the first aspect, the third aspect, the fifth aspect, or the seventh aspect. In a possible design, the chip system further includes a memory. The memory is configured to store a program instruction and data that are necessary for a terminal. The chip system may include a chip, or may include a chip and another discrete device.

According to a fifteenth aspect, a core network element is provided. The core network element has a function of implementing the method according to any one of the second aspect, the fourth aspect, the sixth aspect, or the eighth aspect. The function may be implemented by using hardware, or may be implemented by hardware executing corresponding software. The hardware or the software includes one or more modules corresponding to the functions.

According to a sixteenth aspect, a core network element is provided, including a processor and a memory. The memory is configured to store a computer-executable instruction. When the terminal device runs, the processor executes the computer-executable instruction stored in the memory, so that the terminal device performs the method for determining location information according to any one of the second aspect, the fourth aspect, the sixth aspect, or the eighth aspect.

According to a seventeenth aspect, a core network element is provided, including a processor. The processor is configured to be coupled to a memory, and after reading an instruction in the memory, perform, according to the instruction, the method for determining location information according to any one of the second aspect, the fourth aspect, the sixth aspect, or the eighth aspect.

According to an eighteenth aspect, a computer-readable storage medium is provided. The computer-readable storage medium stores an instruction, and when the instruction runs on a computer, the computer is enabled to perform the method for determining location information according to any one of the second aspect, the fourth aspect, the sixth aspect, or the eighth aspect.

According to a nineteenth aspect, a computer program product including an instruction is provided. When the computer program product runs on a computer, the computer is enabled to perform the method for determining location information according to any one of the second aspect, the fourth aspect, the sixth aspect, or the eighth aspect.

According to a twentieth aspect, a chip system is provided. The chip system includes a processor, configured to support a core network element in implementing a function of the method according to any one of the second aspect, the fourth aspect, the sixth aspect, or the eighth aspect. In a possible design, the chip system further includes a memory. The memory is configured to store a program instruction and data that are necessary for a terminal. The chip system may include a chip, or may include a chip and another discrete device.

### BRIEF DESCRIPTION OF DRAWINGS

FIG. 1 is a schematic diagram showing that a terminal device accesses an LADN by using a 3GPP access technology;
FIG. 2 is a schematic architectural diagram of a 5G network according to an embodiment of this application;
FIG. 3 is a schematic structural diagram of a communications apparatus according to an embodiment of this application;
FIG. 4 is a flowchart 1 of a method for determining location information according to an embodiment of this application;
FIG. 5A and FIG. 5B is a flowchart 2 of a method for determining location information according to an embodiment of this application;
FIG. 6A and FIG. 6B is a flowchart 3 of a method for determining location information according to an embodiment of this application;
FIG. 7A and FIG. 7B is a flowchart 4 of a method for determining location information according to an embodiment of this application;
FIG. 8 is a flowchart 5 of a method for determining location information according to an embodiment of this application;
FIG. 9 is a flowchart 6 of a method for determining location information according to an embodiment of this application;
FIG. 10 is a schematic structural diagram of a terminal device according to an embodiment of this application; and
FIG. 11 is a schematic structural diagram of a core network element according to an embodiment of this application.

### DESCRIPTION OF EMBODIMENTS

In this application, the terms "first", "second", and the like are merely used to distinguish different objects, but not limit a sequence thereof. For example, a first base station and a second base station are merely intended to distinguish between different base stations, and are not intended to limit a sequence thereof.

The term "and/or" in this application describes only an association relationship for describing associated objects and represents that three relationships may exist. For example, A and/or B may represent the following three cases: Only A exists, both A and B exist, and only B exists. In addition, the character "/" in this application usually indicates an "or" relationship between the associated objects.

It should be noted that in this application, the word "exemplary" or "for example" is used to represent giving an example, an illustration, or a description. Any embodiment or design scheme described as "exemplary" or "for example" in this application should not be explained as being more preferred or having more advantages than another embodiment or design scheme. Exactly, use of the word "exemplary", "for example", or the like is intended to present a relative concept in a specific manner.

In addition, the network architecture and the service scenario described in the embodiments of this application are intended to describe the technical solutions of the embodiments of this application more clearly, and do not constitute a limitation on the technical solutions provided in the embodiments of this application. A person of ordinary skill in the art may be aware that: With the evolution of the network architecture and the emergence of new service scenarios, the technical solutions provided in the embodiments of this application are also applicable to similar technical problems.

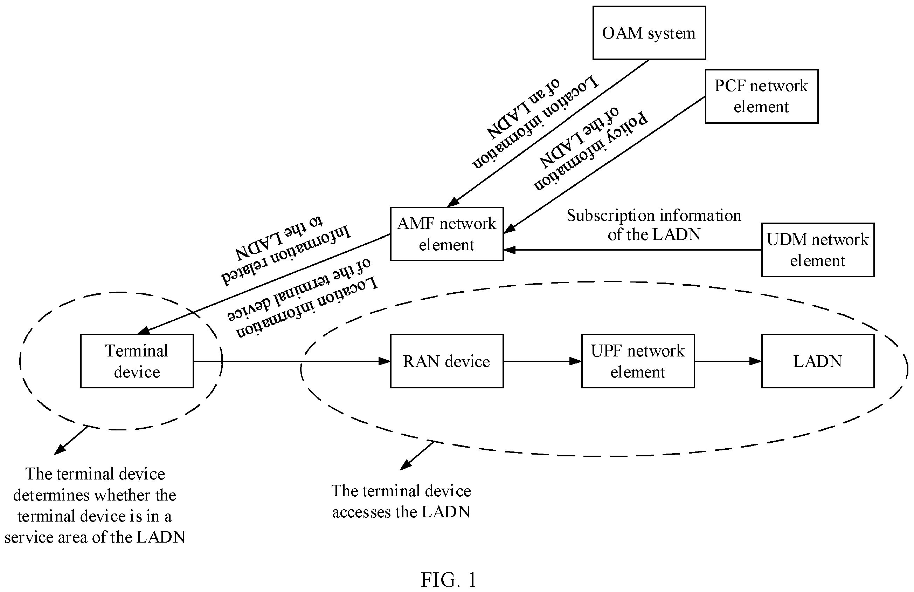

FIG. 1 is a schematic diagram showing that a terminal device accesses an LADN by using a 3GPP access technology. As shown in FIG. 1, an access and mobility management function (Access and Mobility Management Function, AMF) network element first obtains information related to an LADN. For example, the AMF network element obtains location information of the LADN via an operation, administration, and maintenance (Operation Administration and Maintenance, OAM) system. The AMF network element obtains policy information of the LADN via a policy control function (Policy Control Function, PCF) network element. The AMF network element obtains subscription information of the LADN from a unified data management (Unified Data Management, UDM) network element. After obtaining the information related to the LADN, the AMF network element sends the information related to the LADN to which the terminal device subscribes, to the terminal device. In addition, the AMF network element sends the location information of the terminal device to the terminal device. In this way, the terminal device determines, based on the location information of the terminal device and the location information of the LADN, whether the terminal device is in a service area of the LADN. If the terminal device is in the service area of the LADN, the terminal device accesses the LADN via a radio access network (radio access network, RAN) device and a user plane function (User Plane Function, UPF) network element.

In the foregoing process, the location information of the LADN is a TA list. The location information of the terminal device is TAI information or CI information.

However, when the terminal device accesses a core network by using a non-3GPP access technology, the AMF network element does not store the TAI information or the CI information of the terminal device. In this case, the terminal device cannot obtain the TAI information or the CI information from the AMF network element. Therefore, the terminal device cannot determine whether the terminal device is in the service area of the LADN. As a result, the terminal device cannot access the LADN.

To resolve the foregoing problem, an embodiment of this application provides a method for determining location information. The foregoing method for determining location information may be applied to a wireless communications system, for example, a long term evolution (Long Term Evolution, LTE) network and a 5th generation (5th Generation, 5G) mobile communications technology network, and may further be applied to a future wireless communications system. This is not limited in the embodiments of this application. In the embodiments of this application, a 5G network is used as an example for description.

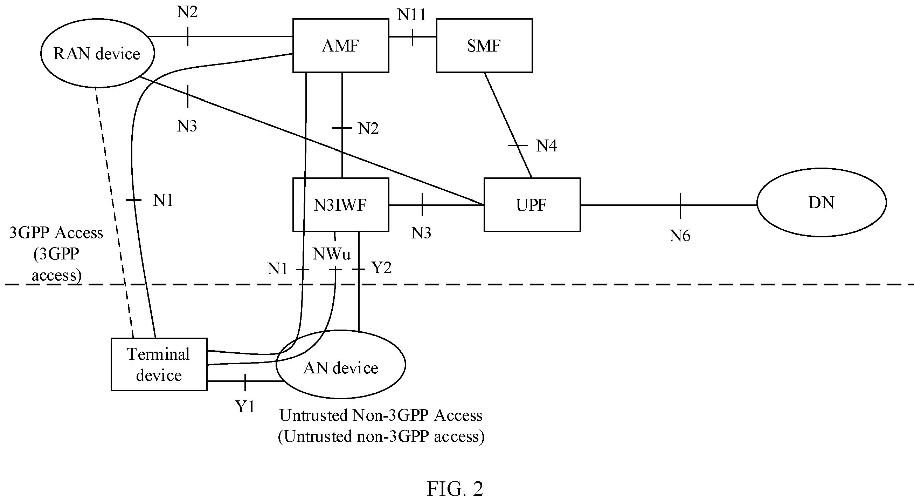

As shown in FIG. 2, in an architecture, a terminal device can access a 5G core network by using a 3GPP access technology, and the terminal device can also access the 5G core network by using a non-3GPP access technology.

The 3GPP access technology in the embodiments of this application may be a 5G radio access network technology or another future 3GPP access technology. The non-3GPP access technology in the embodiments of this application may be a wireless fidelity (wireless fidelity, Wi-Fi) access technology, a wireless local area network (wireless local area networks, WLAN) access technology, a fixed network access technology, or another future non-3GPP access technology. This is not specifically limited in the embodiments of this application.

In actual application, when accessing the core network by using the 3GPP access technology, the terminal device accesses the core network via a 3GPP access network element. Similarly, when accessing the core network by using the non-3GPP access technology, the terminal device accesses the core network via a non-3GPP access network element.

As shown in FIG. 2, for example, in the embodiments of this application, the 3GPP access network element may be a RAN device in a 5G network, an evolved universal terrestrial radio access network (evolved universal terrestrial radio access network, E-UTRAN) device in a fourth generation (4rd generation, 4G) network, or a UTRAN device in a third generation (3rd generation, 3G) network. The non-3GPP access network element may be an access network (access network, AN) device in a WLAN. This is not limited in the embodiments of this application.

As shown in FIG. 2, the 5G network includes: an AMF network element, a session management function (Session Management Function, SMF) network element, a non-3GPP interworking function (Non-3GPP Interworking Function, N3IWF) network element, and a UPF network element.

Optionally, the N3IWF network element may also be referred to as a next generation packet data gateway (next generation packet data gateway, NG-PDG), a non-3GPP access gateway (non-3GPP gateway, N3G-GW), or the like. This is not specifically limited in the embodiments of this application.

As shown in FIG. 2, in the 5G network architecture, when accessing a core network by using the 3GPP access technology, the terminal device communicates with the AMF network element through a next generation (Next generation, N) 1 interface (N1 for short). In addition, the 3GPP access network element communicates with the AMF network element through an N2 interface (N2 for short), and the 3GPP access network element communicates with the UPF through an N3 interface. When accessing the core network by using the non-3GPP access technology, the terminal device communicates with the AMF network element through N1, and the terminal device communicates with the N3IWF network element through an NWu interface (NWu for short). In addition, the terminal device communicates with an untrusted non-3GPP access network element through a Y1 interface (Y1 for short). The untrusted non-3GPP access network element communicates with the N3IWF network element through a Y2 interface (Y2 for short). In a core network, the N3IWF network element communicates with the AMF network element through N2, and the N3IWF network element communicates with the UPF network element through the N3 interface (N3 for short). The AMF network element communicates with the SMF network element through an N11 interface. The SMF network element communicates with the UPF network element through an N4 interface (N4 for short). The UPF network element communicates with a data network (Data network, DN) through an N6 interface (N6 for short).

It should be noted that names of the interfaces between the network elements in FIG. 2 are merely examples and the interfaces may have other names in specific implementation. This is not specifically limited in the embodiments of this application.

Although not shown, the 5G network may further include another network element, for example, a UDM network element, an authentication server function (Authentication Server Function, AUSF) network element, a PCF network element, a location management function (Location Management Function, LMF) network element, and a network exposure function (Network Exposure Function, NEF) network element. This is not specifically limited in the embodiments of this application.

It should be noted that the AMF network element, the SMF network element, the UPF network element, the N3IWF network element, and the like in FIG. 2 are merely names, and the names constitute no limitation on the device. In the 5G network and another future network, the AMF network element, the SMF network element, the UPF network element, and the N3IWF network element may have other names. This is not specifically limited in the embodiments of this application. For example, the UPF network element may alternatively be replaced with a UPF, a UPF entity, or the like. A general description is provided herein, and details are not described below again.

The terminal device in the embodiments of this application may also be referred to as user equipment (user equipment, UE for short), an access terminal, a subscriber unit, a subscriber station, a mobile station, a mobile console, a remote station, a remote terminal, a mobile device, a user terminal, a terminal, a wireless communications device, a user agent, or a user apparatus. Alternatively, the terminal device may be a station (station, ST for short) in a wireless local area network (wireless local area networks, WLAN for short), a cellular phone, a cordless phone, a session initiation protocol (Session Initiation Protocol, SIP for short) phone, a wireless local loop (wireless local loop, WLL for short) station, a personal digital assistant (personal digital assistant, PDA for short) device, a handheld device having a wireless communication function, a computing device, another processing device connected to a wireless modem, a vehicle-mounted device, or a wearable device (may also be referred to as a wearable intelligent device). The terminal device may alternatively be a terminal device in a next-generation communications system, for example, a terminal device in 5G or a terminal device in a future evolved public land mobile network (public land mobile network, PLMN for short), or a terminal device in a new radio (new radio, NR for short) communications system.

Optionally, the terminal device or a core network element in FIG. 2 in the embodiments of this application may be implemented by one device, or may be jointly implemented by a plurality of devices, or may be a function module in one device. This is not specifically limited in the embodiments of this application. It may be understood that the foregoing functions may be network elements in a hardware device, or may be software functions running on dedicated hardware, or may be virtualization functions instantiated on a platform (for example, a cloud platform).

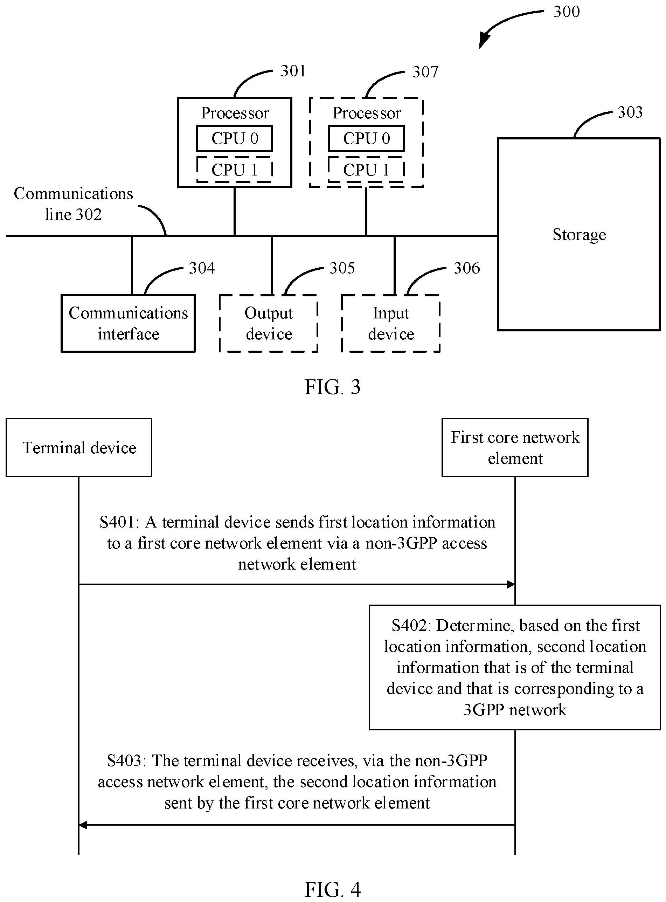

For example, the terminal device or the core network element in FIG. 2 in the embodiments of this application may be implemented via a communications device in FIG. 3. FIG. 3 is a schematic diagram of a hardware structure of a communications device according to an embodiment of this application. The communications device 300 includes at least one processor 301, a communications line 302, a memory 303, and at least one communications interface 304. When the communications device 300 is a terminal device, the communications interface 304 is a transceiver of the terminal device.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communications line 302 may include a path for transmitting information between the foregoing components.

The communications interface 304, which uses any apparatus such as a transceiver, is configured to communicate with another device or communications network, such as Ethernet, a RAN, or a wireless local area network (wireless local area networks, WLAN).

The memory 303 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, or the like), a magnetic disk storage medium or another magnetic storage device, or any other medium that can be used to carry or store expected program code in a form of an instruction or a data structure and that can be accessed by a computer. However, the memory 303 is not limited thereto. The memory may exist independently, and is connected to the processor through the communications line 302. Alternatively, the memory may be integrated with the processor.

The memory 303 is configured to store a computer-executable instruction for executing the solutions of this application, and the processor 301 controls the execution. The processor 301 is configured to execute the computer-executable instruction stored in the memory 303, to implement a method for determining location information provided in the following embodiments of this application.

Optionally, the computer-executable instruction in the embodiments of this application may also be referred to as application program code. This is not specifically limited in the embodiments of this application.

During specific implementation, in an embodiment, the processor 301 may include one or more CPUs, for example, a CPU 0 and a CPU 1 in FIG. 3.

During specific implementation, in an embodiment, the communications device 300 may include a plurality of processors, for example, the processor 301 and a processor 307 in FIG. 3. Each of the processors may be a single-core (single-CPU) processor or a multi-core (multi-CPU) processor. The processor herein may be one or more devices, circuits, and/or processing cores for processing data (for example, a computer program instruction).

During specific implementation, in an embodiment, the communications device 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input of a user in a plurality of manners. For example, the input device 306 may be a mouse, a keyboard, a touchscreen device, a sensing device, or the like.

The communications device 300 may be a general-purpose device or a dedicated device. During specific implementation, the communications device 300 may be a desktop computer, a portable computer, a network server, a palmtop computer (personal digital assistant, PDA), a mobile phone, a tablet computer, a wireless terminal device, an embedded device, or a device with a structure similar to that in FIG. 3. A type of the communications device 300 is not limited in the embodiments of this application.

The following specifically describes, with reference to FIG. 2 and FIG. 3, the method for determining location information provided in the embodiments of this application.

It should be noted that names of messages or parameters in messages between network elements in the following embodiments of this application are merely examples, and the messages or the parameters may have other names in specific implementation. This is not specifically limited in the embodiments of this application.

As shown in FIG. 4, an embodiment of this application provides a method for determining location information. The method is applied to a scenario in which a terminal device accesses a core network by using a non-3GPP access technology. The method includes the following steps.

S401: A terminal device sends first location information to a first core network element via a non-3GPP access network element.

The first location information is location information that is of the terminal device and that is corresponding to a non-3GPP network, and the first location information includes at least one of the following: wireless local area network identification information, longitude and latitude coordinate information, information about an IP address of the terminal device, and wireless local area network address information.

For example, the wireless local area network identification information includes a service set identifier (Service Set Identifier, SSID), a basic service set identifier (Service Set Identifier, BSSID), or an extended service set identifier (Extended Service Set Identifier, ESSID).

In an optional implementation, the terminal device sends the first location information to a non-3GPP access network element. Then the non-3GPP access network element forwards the first location information to the first core network element.

For example, the terminal device determines longitude and latitude coordinate information of the terminal device by using a positioning technology, and then the terminal device sends the longitude and latitude coordinate information of the terminal device to the non-3GPP access network element. Then the non-3GPP access network element sends the longitude and latitude coordinate information of the terminal device to the first core network element.

In another optional implementation, the non-3GPP access network element determines first location information of the terminal device, and then the non-3GPP access network element sends the first location information of the terminal device to the first core network element.

The following describes by using an example in which the non-3GPP access network element is a WLAN AN device. For example, the WLAN AN device uses the wireless local area network identification information of the WLAN AN device as the first location information of the terminal device. In this case, the WLAN AN device sends the wireless local area network identification information to the first core network element.

For another example, the WLAN AN device calculates an accurate distance from the terminal device to the WLAN AN device based on a fine timing measurement (Fine Timing Measurement, FTM) protocol, and determines accurate location information of the terminal device based on accurate location information (including the longitude and latitude information, height, or city address information) pre-configured by the WLAN AN. Then the WLAN AN device sends the accurate location information of the terminal device to the first core network element.

S402: The first core network element determines, based on the first location information, second location information that is of the terminal device and that is corresponding to the 3GPP network.

The second location information is location information that is of the terminal device and that is corresponding to the 3GPP network, and the second location information includes TAI information and/or CI information.

In an optional implementation, the first core network element determines the second location information based on the first location information and a preset correspondence between the first location information and the second location information.

In another optional implementation, the first core network element sends the first location information to a third core network element. The third core network element determines the second location information based on the first location information and a preset correspondence between the first location information and the second location information. The first core network element receives the second location information sent by the third core network element.

S403: The terminal device receives, via the non-3GPP access network element, the second location information sent by the first core network element.

Based on the foregoing solution, optionally, the terminal device further receives LADN information that corresponds to the terminal device and that is sent by the first core network element, where the LADN information may be used to determine a service area of the LADN. For example, the LADN information includes a list of tracking areas, and the list of tracking areas includes at least one piece of TAI information. In this way, the terminal device determines a target LADN based on the second location information and the LADN information.

Optionally, the terminal device determines a first non-3GPP access network gateway based on the second location information. Then the terminal device accesses the LADN via the first non-3GPP access network gateway.

In this way, based on the foregoing solution, when the terminal device accesses a core network by using the non-3GPP access technology, the terminal device can obtain the second location information that is of the terminal device and that is corresponding to the 3GPP network. In this way, the terminal device may determine, based on the second location information, whether the terminal device is in a service area of the LADN, and then access the LADN.

It should be noted that in a scenario in which the terminal device accesses the core network by using the non-3GPP access technology, the second location information that is of the terminal device and that is determined based on the method shown in FIG. 4 may be used in a service procedure of accessing the LADN by the terminal device, and may further be used in another service procedure.

In addition, when the method shown in FIG. 4 is applied to the 5G network architecture shown in FIG. 2, the first core network element is an AMF network element, the non-3GPP access network element is an AN device, the third core network element may be an LMF network element, an NEF network element, or another core network element, and the first non-3GPP access network gateway is an N3IWF network element.

Actions of the terminal device or the core network element in steps S401 to S403 may be performed by the processor 301 in the communications device 300 shown in FIG. 3 by invoking the application program code stored in the memory 303. This is not limited in this embodiment of this application.

The following specifically describes the method for determining location information shown in FIG. 4 with reference to the 5G network architecture shown in FIG. 2 and a specific application scenario.

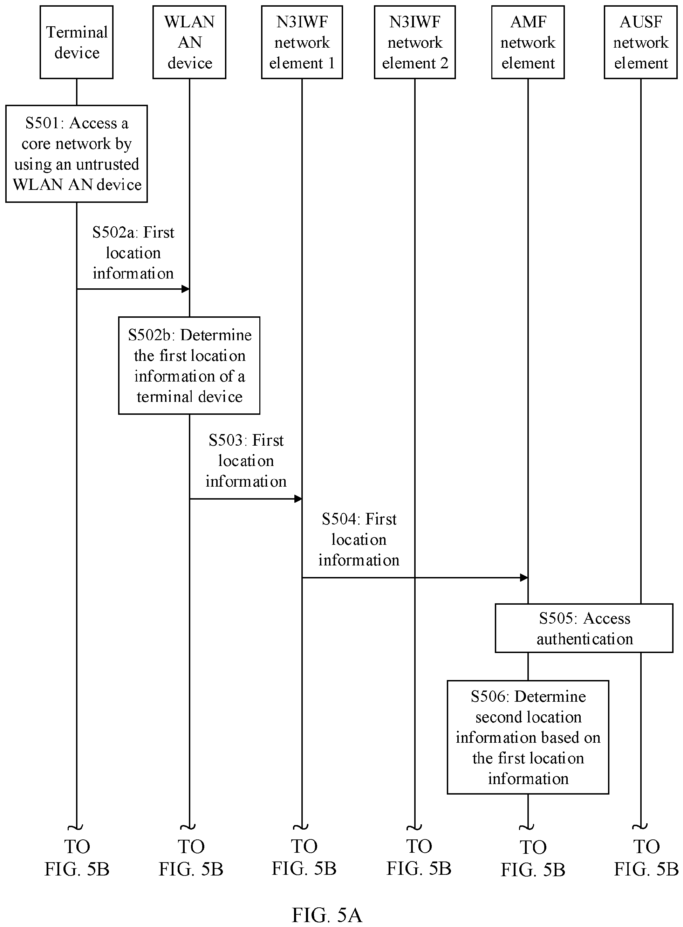

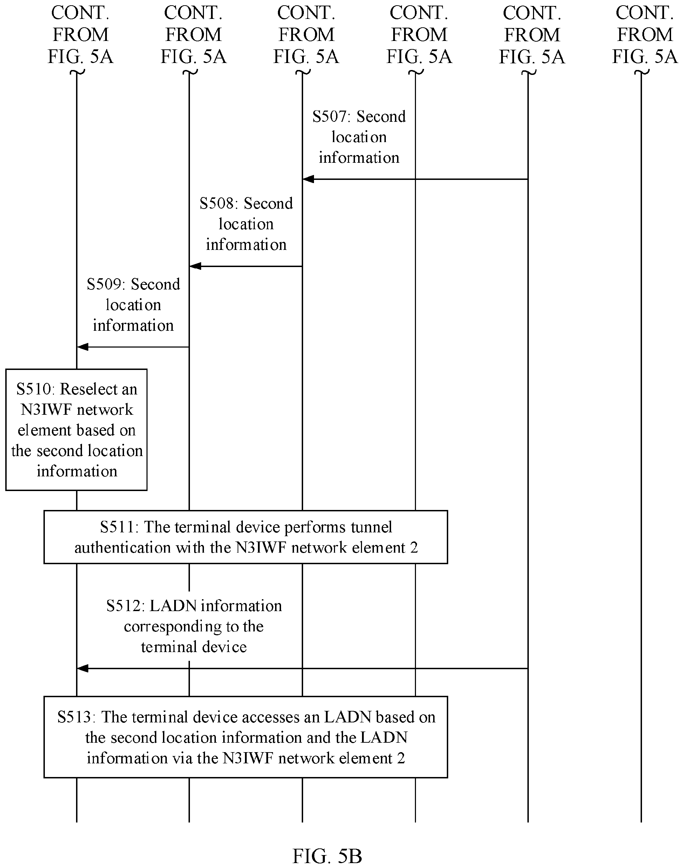

As shown in FIG. 5A and FIG. 5B, an embodiment of this application provides another method for determining location information. The method is applied to a scenario in which a terminal device accesses a core network by using a non-3GPP access technology. The method includes the following steps.

S501: The terminal device accesses the core network by using an untrusted WLAN AN device.

S502a: The terminal device sends the first location information to the WLAN AN device.

Optionally, S502a may be replaced with S502b.

S502b: The WLAN AN device determines the first location information of the terminal device.

For example, the WLAN AN device uses wireless local area network identification information of the WLAN AN device as the first location information of the terminal device.

For another example, the WLAN AN device uses wireless local area network address information of the WLAN AN device as the first location information of the terminal device. The wireless local area network address information includes IP address information.

S503: The WLAN AN device sends the first location information to an N3IWF network element 1.

It should be noted that the N3IWF network element 1 is an N3IWF network element initially connected to the terminal device when the terminal device first accesses the core network.

S504: The N3IWF network element 1 sends the first location information to an AMF network element.

S505: The AMF network element and an AUSF network element complete access authentication on the terminal device.

In an optional implementation, the AMF network element sends authentication request information to the AUSF network element, where the authentication request information carries an authentication parameter of the terminal device. The AUSF network element performs access authentication on the terminal device based on the authentication parameter carried in the authentication request information. If an authentication succeeds, the AUSF network element returns authentication response information to the AMF network element, to complete access authentication on the terminal device.

S506: The AMF network element determines the second location information based on the first location information.

Optionally, the AMF network element determines the second location information based on the first location information and a preset correspondence between the first location information and the second location information.

Alternatively, the AMF network element sends the first location information to an LMF network element or an NEF network element. The LMF network element or the NEF network element may convert the first location information into the second location information based on the preset correspondence between the first location information and the second location information. Alternatively, the NEF network element may convert the first location information into the second location information via an application function (Application Function, AF) network element. After the LMF network element or the NEF network element converts the first location information into the second location information, the AMF network element receives the second location information sent by the LMF network element or the NEF network element.

S507: The AMF network element sends the second location information to the N3IWF network element 1.

S508: The N3IWF network element 1 sends the second location information to the WLAN AN device.

S509: The WLAN AN device sends the second location information to the terminal device.

S510: The terminal device reselects the N3IWF network element based on the second location information.

In an optional implementation, the terminal device constructs a fully-qualified domain name (Fully Qualified Domain Name, FQDN) based on the second location information and/or a public land mobile network identifier (Public Land Mobile Network ID, PLMN ID). Then the terminal device sends the fully-qualified domain name to a domain name system (Domain Name System, DNS) server, to obtain an address of the reselected N3IWF network element. The terminal device establishes a connection to the reselected N3IWF network element based on the address of the reselected N3IWF network element.

In the embodiment shown in FIG. 5A and FIG. 5B, the reselected N3IWF network element is an N3IWF network element 2.

S511: The terminal device performs tunnel authentication with the N3IWF network element 2.

The tunnel authentication is a process in which mutual authentication is performed when an internet protocol security (Internet Protocol Security, IPsec) tunnel is established between the terminal device and the N3IWF network element. After the tunnel authentication is completed, subsequent control plane signaling may be securely transmitted through the IPsec tunnel. For a detailed description of the process of the tunnel authentication, refer to an existing 3GPP protocol. Details are not described in this embodiment of this application.

S512: The terminal device receives LADN information that corresponds to the terminal device and that is sent by the AMF network element.

The LADN information includes a list of tracking areas, and the list of tracking areas includes at least one piece of TAI information.

S513: The terminal device accesses the LADN based on the second location information and the LADN information via the N3IWF network element 2.

In an optional implementation, the terminal device determines a target LADN based on the second location information and the LADN information. Then the terminal device establishes a protocol data unit (Protocol Data Unit, PDU) session via the N3IWF network element 2, to access the target LADN.

Actions of the terminal device or the core network element in steps S501 to S513 may be performed by the processor 301 in the communications device 300 shown in FIG. 3 by invoking the application program code stored in the memory 303. This is not limited in this embodiment of this application.

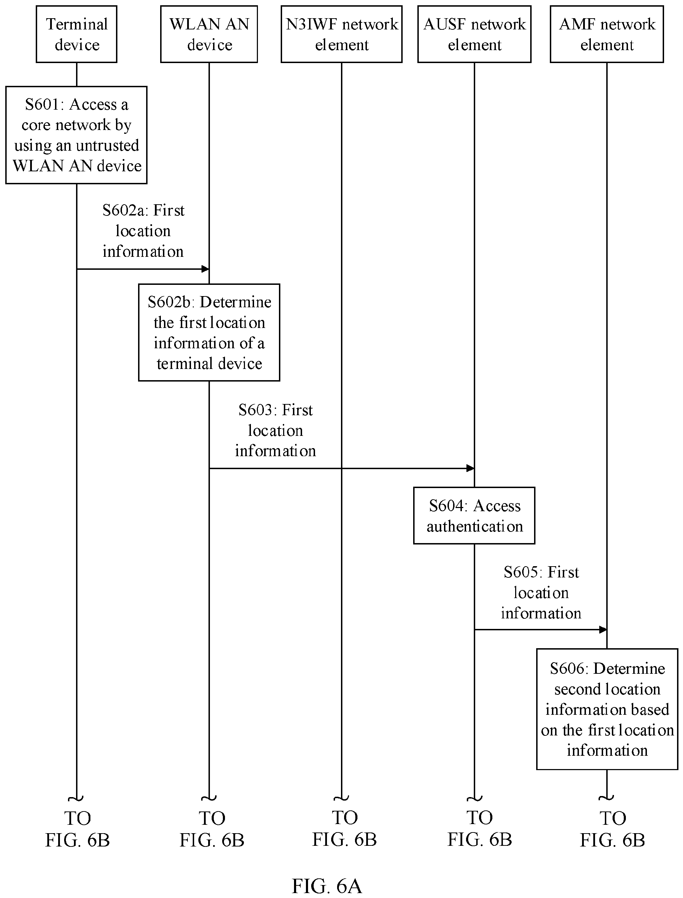

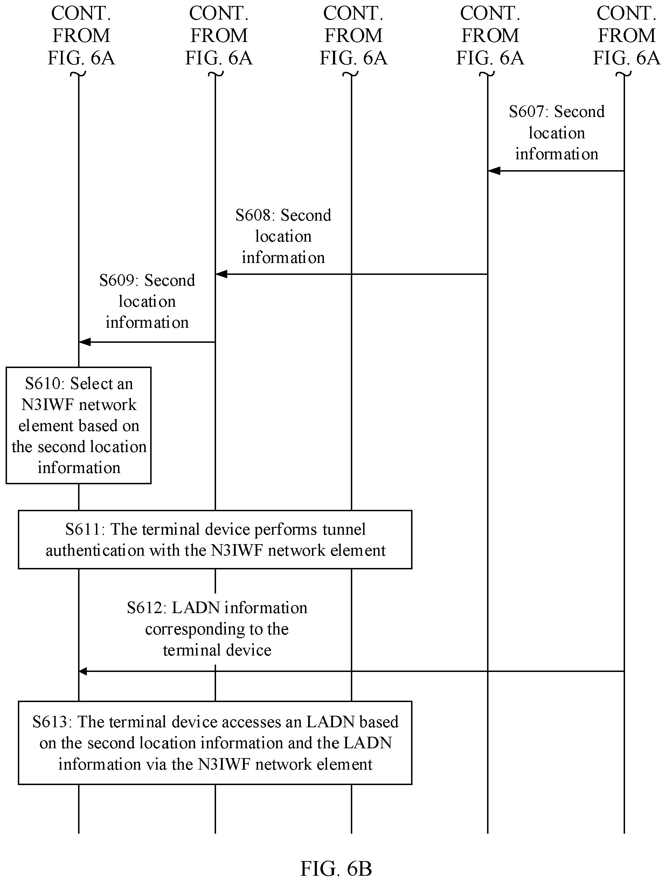

As shown in FIG. 6A and FIG. 6B, an embodiment of this application further provides another method for determining location information. The method is applied to a scenario in which a terminal device accesses a core network by using a non-3GPP access technology. The method includes the following steps.

S601 to S602b are similar to steps S501 to S502b. For related descriptions, refer to the embodiment shown in FIG. 5A. Details are not described herein again.

S603: The WLAN AN device sends the first location information to an AUSF network element.

S604: The AUSF network element completes access authentication on the terminal device.

The authentication procedure herein is similar to an untrusted non-3GPP access authentication procedure in 4G. The AUSF network element herein is similar to an AAA (Authentication, Authorization, Accounting) server in 4G, and the WLAN AN device and the AUSF interact with each other by using a diameter protocol. For a detailed process, refer to a protocol related to 3GPP. Details are not described herein again.

S605: The AUSF network element sends the first location information to the AMF network element.

S606 is Similar to step S506. For related descriptions, refer to the embodiment shown in FIG. 5A. Details are not described herein again.

S607: The AMF network element sends the second location information to the AUSF network element.

S608: The AUSF network element sends the second location information to the WLAN AN device.

S609 to S613 are similar to steps S509 to S513. A difference lies in that in the embodiment shown in FIG. 6B, when accessing a core network by using a non-3GPP access technology, the terminal device does not need to connect to the core network element via an initial N3IWF network element. Therefore, step S610 is that "the terminal device selects the N3IWF network element based on the second location information". For related descriptions of steps S609 to S613, refer to the embodiment shown in FIG. 5B. Details are not described herein again.

Actions of the terminal device or the core network element in steps S601 to S613 may be performed by the processor 301 in the communications device 300 shown in FIG. 3 by invoking the application program code stored in the memory 303. This is not limited in this embodiment of this application.

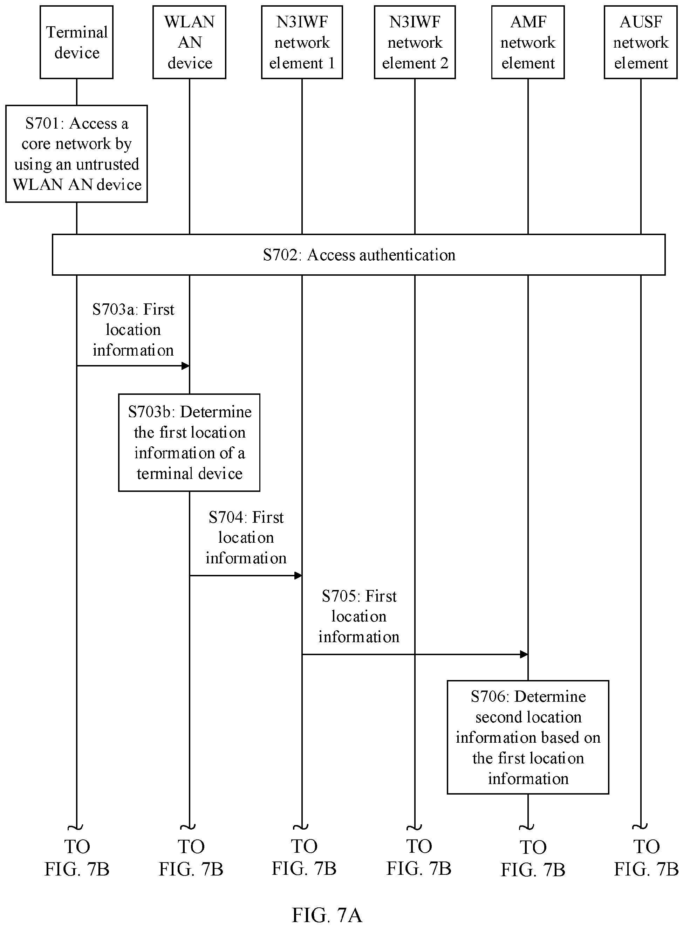

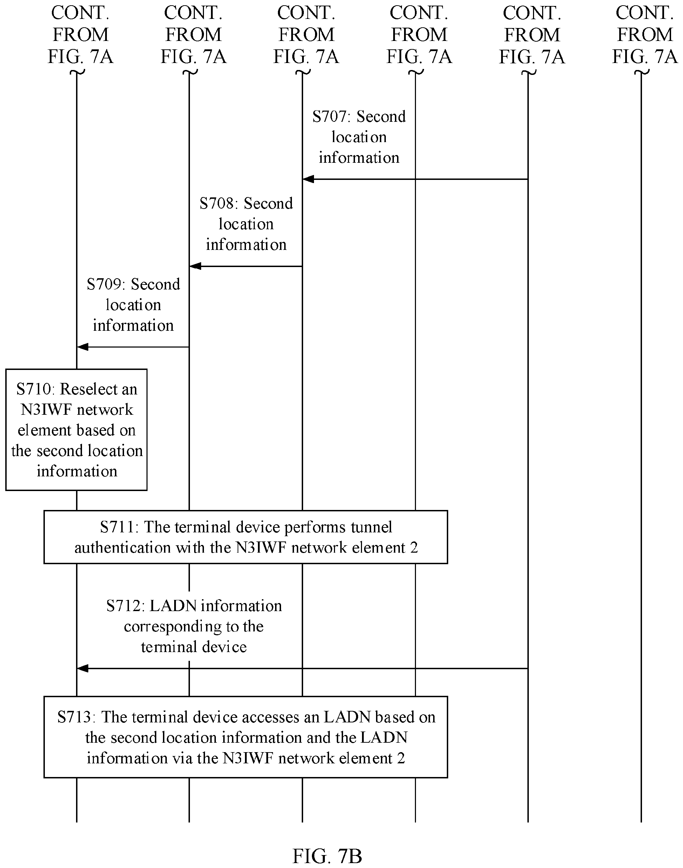

As shown in FIG. 7A and FIG. 7B, an embodiment of this application further provides another method for determining location information. The method is applied to a scenario in which a terminal device accesses a core network by using a non-3GPP access technology. The method includes the following steps.

S701: The terminal device accesses the core network by using an untrusted WLAN AN device.

S702: The terminal device completes access authentication.

S703a: The terminal device sends the first location information to the WLAN AN device.

Optionally, the terminal device sends first NAS signaling to the WLAN AN device, where the first NAS signaling carries the first location information.

S703b is similar to step 502b. For related descriptions, refer to the embodiment shown in FIG. 5A. Details are not described herein again.

S704: The WLAN AN device sends the first location information to an N3IWF network element 1.

Optionally, the WLAN AN device sends the first NAS signaling to the N3IWF network element 1.

S705: The N3IWF network element 1 sends the first NAS signaling to the AMF network element.

Optionally, the N3IWF network element 1 sends the first NAS signaling to the AMF network element.

S706: The AMF network element determines second location information based on the first location information.

S707: The AMF network element sends the second location information to the N3IWF network element 1.

Optionally, the AMF network element sends second NAS signaling to the N3IWF network element 1, where the second NAS signaling carries the second location information.

S708: The N3IWF network element 1 sends the second location information to the WLAN AN device.

Optionally, the N3IWF network element 1 sends the second NAS signaling to the WLAN AN device.

S709: The WLAN AN device sends the second location information to the terminal device.

Optionally, the WLAN AN device sends the second NAS signaling to the terminal device.

S710 to S713 are similar to steps S510 to S513. For related descriptions, refer to the embodiment shown in FIG. 5B. Details are not described herein again.

Actions of the terminal device or the core network element in steps S701 to S713 may be performed by the processor 301 in the communications device 300 shown in FIG. 3 by invoking the application program code stored in the memory 303. This is not limited in this embodiment of this application.

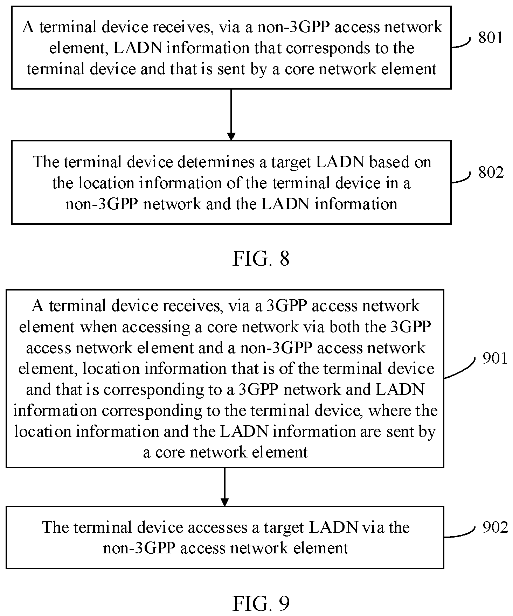

As shown in FIG. 8, an embodiment of this application provides another method for determining location information. The method is applied to a scenario in which a terminal device accesses a core network by using a non-3GPP access technology. The method includes the following steps.

S801: A terminal device receives, via a non-3GPP access network element, LADN information that corresponds to the terminal device and that is sent by a core network element.

The LADN information is information about an LADN in a non-3GPP network. The LADN information has the following cases.

Case 1: The LADN information includes a wireless local area network identifier list, and the wireless local area network identifier list includes at least one piece of wireless local area network identification information.

Case 2: The LADN information includes a list of IP addresses, and the list of IP addresses includes at least one piece of information about an IP address.

Case 3: The LADN information includes a longitude and latitude coordinate list, and the longitude and latitude coordinate list includes at least one piece of longitude and latitude coordinate information.

Case 4: The LADN information includes a wireless local area network address list, and the wireless local area network address list includes at least one piece of wireless local area network address information.

Certainly, the LADN information may further have another case. This is not limited in this embodiment of this application.

S802: The terminal device determines a target LADN based on the location information of the terminal device in the non-3GPP network and the LADN information.

It should be noted that the terminal device is located in a service area of the target LADN.

Corresponding to the foregoing case 1, the terminal device determines the target LADN by using the wireless local area network identification information of the terminal device and the wireless local area network identifier list included in the LADN information.

Corresponding to the foregoing case 2, the terminal device determines the target LADN by using the information about the IP address of the terminal device and the list that is of the IP addresses and that is included in the LADN information.

Corresponding to the foregoing case 3, the terminal device determines the target LADN by using the longitude and latitude coordinate information of the terminal device and the longitude and latitude coordinate list included in the LADN information.

Corresponding to the foregoing case 4, the terminal device determines the LADN by using the wireless local area network address information of the terminal device and the wireless local area network address list included in the LADN information.

Optionally, the terminal device determines a non-3GPP access network gateway based on the location information of the terminal device in the non-3GPP network. Then the terminal device accesses the target LADN via the non-3GPP access network gateway.

In this way, the terminal device may access the LADN by using the non-3GPP access technology.

It should be noted that when the method shown in FIG. 8 is applied to the 5G network architecture shown in FIG. 2, the non-3GPP access network element is an AN device, the core network element is an AMF network element, and the non-3GPP access network gateway is an N3IWF network element.

Actions of the terminal device or the core network element in steps S801 and S802 may be performed by the processor 301 in the communications device 300 shown in FIG. 3 by invoking the application program code stored in the memory 303. This is not limited in this embodiment of this application.

As shown in FIG. 9, an embodiment of this application provides another method for determining location information. The method is applied to a scenario in which a terminal device accesses a core network via both a 3GPP access network element and a non-3GPP access network element. The method includes the following steps.

S901: The terminal device receives, via the 3GPP access network element when accessing the core network via both the 3GPP access network element and the non-3GPP access network element, location information that is of the terminal device and that is corresponding to the 3GPP network and LADN information corresponding to the terminal device, where the location information and the LADN information are sent by a core network element.

The location information that is of the terminal device and that is corresponding to the 3GPP network includes TAI information and/or CI information. The LADN information includes a list of tracking areas, and the list of tracking areas includes at least one piece of TAI information.

S902: The terminal device accesses a target LADN via the non-3GPP access network element.

The target LADN is determined by the terminal device based on the location information of the terminal device in the 3GPP network and the LADN information.

It should be noted that when the method shown in FIG. 9 is applied to the 5G network architecture shown in FIG. 2, the non-3GPP access network element is an AN device, and the core network element is an AMF network element.

Actions of the terminal device or the core network element in steps S901 and S902 may be performed by the processor 301 in the communications device 300 shown in FIG. 3 by invoking the application program code stored in the memory 303. This is not limited in this embodiment of this application.

The foregoing describes the solutions provided in the embodiments of this application mainly from a perspective of interaction between the terminal device and the core network element. It may be understood that to implement the foregoing functions, the core network element and the terminal device include a corresponding hardware structure and/or software module used to perform each function. A person skilled in the art should easily be aware that the access network device, an application function device, and algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this embodiment of this application, the core network element and the terminal device may be divided based on the foregoing method examples. For example, the modules or the units may be divided corresponding to various functions, or two or more functions may be integrated into one processing module. The foregoing integrated module may be implemented in a form of hardware, or may be implemented in a form of a software module or unit. In this embodiment of this application, module or unit division is an example, and is merely a logical function division. In actual implementation, another division manner may be used.

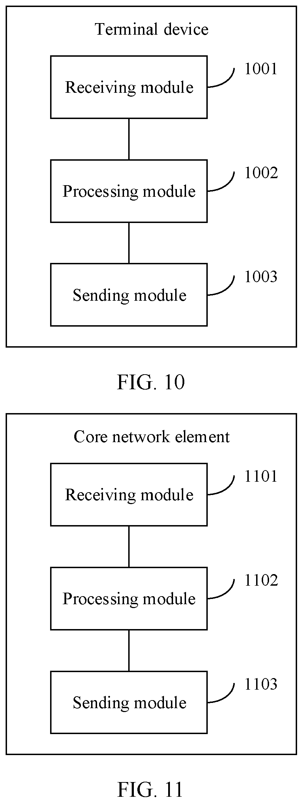

For example, when the function modules are obtained through division based on a corresponding function, FIG. 10 is a possible schematic structural diagram of a terminal device according to the foregoing embodiments. As shown in FIG. 10, the terminal device includes a receiving module 1001, a processing module 1002, and a sending module 1003. The terminal device may perform the following action 1, action 2, action 3, or action 4.

Action 1: The sending module 1003 is configured to send first location information to a first core network element via a non-3GPP access network element, where the first location information is used by the first core network element to determine second location information that is of the terminal device and that is corresponding to a 3GPP network. The receiving module 1001 is configured to receive, via the non-3GPP access network element, second location information sent by the first core network element.

Optionally, the receiving module 1001 is further configured to receive LADN information that corresponds to the terminal device and that is sent by the first core network element. The processing module 1002 is configured to determine a target LADN based on the second location information and the LADN information.

Optionally, the processing module 1002 is further configured to determine a first non-3GPP access network gateway based on the second location information. The processing module 1002 accesses an LADN via the first non-3GPP access network gateway.

Optionally, the sending module 1003 is configured to send the first location information to the first core network element via the non-3GPP access network element before access authentication is completed.

Optionally, the sending module 1003 is configured to send the first location information to the first core network element via the non-3GPP access network element and a second non-3GPP access network gateway before access authentication is completed. The receiving module 1001 is configured to receive, via the non-3GPP access network element and the second non-3GPP access network gateway, second location information sent by the first core network element.

Optionally, the sending module 1003 is configured to send the first location information to the first core network element via the non-3GPP access network element and a second core network element before access authentication is completed. The receiving module 1001 is configured to receive, via the non-3GPP access network element and the second core network element, the second location information sent by the first core network element.

Optionally, the sending module 1003 is configured to send the first location information to the first core network element via the non-3GPP access network element after access authentication is completed.

Optionally, the sending module 1003 is configured to send the first location information to the first core network element via the non-3GPP access network element and the second non-3GPP access network gateway after access authentication is completed. The receiving module 1001 is configured to receive, via the non-3GPP access network element and the second non-3GPP access network gateway, second location information sent by the first core network element.

Optionally, the sending module 1003 is configured to send first NAS signaling to the first core network element via the non-3GPP access network element and the second non-3GPP access network gateway after access authentication is completed, where the first NAS signaling carries the first location information. The receiving module 1001 is configured to receive, via the non-3GPP access network element and the second non-3GPP access network gateway, second NAS signaling sent by the first core network element, where the second NAS signaling carries the second location information.

Optionally, the first location information includes at least one of the following: wireless local area network identification information, longitude and latitude coordinate information, information about an internet protocol (Internet Protocol, IP) address of the terminal device, and wireless local area network address information. The second location information includes tracking area identity (Tracking Area identity, TAI) information or cell identity (Cell identity, CI) information. The LADN information includes a list of tracking areas, and the list of tracking areas includes at least one piece of TAI information.

Action 2: The receiving module 1001 is configured to receive, via a non-3GPP access network element, location information that is of a terminal device corresponding to a 3GPP network and that is sent by a first core network element. The receiving module 1001 is further configured to receive LADN information that corresponds to the terminal device and that is sent by the first core network element. The processing module 1002 is configured to determine a target LADN based on the location information that is of the terminal device and that is corresponding to the 3GPP network and the LADN information.

Optionally, the sending module 1003 is configured to send, via the non-3GPP access network element, the location information that is of the terminal device and that is corresponding to the non-3GPP network, to the first core network element. The location information that is of the terminal device and that is corresponding to the non-3GPP network is used by the first core network element to determine the location information that is of the terminal device and that is corresponding to the 3GPP network.

Optionally, the processing module 1002 is configured to determine a non-3GPP access network gateway based on the location information that is of the terminal device and that is corresponding to a 3GPP network; and access a target LADN via the non-3GPP access network gateway.

Optionally, the location information that is of the terminal device and that is corresponding to the 3GPP network includes TAI information and/or CI information. The LADN information includes a list of tracking areas, and the list of tracking areas includes at least one piece of TAI information.

Action 3: The receiving module 1001 is configured to receive, via a non-3GPP access network element, LADN information that corresponds to a terminal device and that is sent by a core network element, where the LADN information is information about an LADN in a non-3GPP network. The processing module 1002 is configured to determine a target LADN based on the location information that is of the terminal device and that is corresponding to the non-3GPP network and the LADN information.

Optionally, the processing module 1002 is configured to: determine a non-3GPP access network gateway based on the location information that is of the terminal device and that is corresponding to the non-3GPP network; and access the target LADN via the non-3GPP access network gateway.

Optionally, the location information that is of the terminal device and that is corresponding to the non-3GPP network includes at least one of the following: wireless local area network identification information, longitude and latitude coordinate information, information about an IP address of the terminal device, and wireless local area network address information.

Optionally, the LADN information includes at least one of the following: a wireless local area network identifier list, a longitude and latitude coordinate list, a list of IP addresses, and a wireless local area network address list. The wireless local area network identifier list includes at least one piece of wireless local area network identification information. The longitude and latitude coordinate list includes at least one piece of longitude and latitude coordinate information. The list of IP addresses includes at least one piece of information about an IP address. The wireless local area network address list includes at least one piece of wireless local area network address information.

Action 4: The receiving module 1001 is configured to receive, via a 3GPP access network element when a terminal device accesses a core network via both a 3GPP access network element and a non-3GPP access network element, location information that is of the terminal device and that is corresponding to a 3GPP network and LADN information corresponding to the terminal device, where the location information and the LADN information are sent by a core network element. The processing module 1002 is configured to access a target LADN via the non-3GPP access network element, where the target LADN is determined by the terminal device based on the location information that is of the terminal device and that is corresponding to the 3GPP network and the LADN information.

Optionally, the processing module 1002 is configured to determine a non-3GPP access network gateway based on the location information that is of the terminal device and that is corresponding to the 3GPP network. The terminal device accesses the target LADN via the non-3GPP access network element and the non-3GPP access network element.

Optionally, the location information that is of the terminal device and that is corresponding to the 3GPP network includes TAI information and/or CI information.

Optionally, the LADN information includes a list of tracking areas, and the list of tracking areas includes at least one piece of TAI information.

Specifically, in the methods shown in FIG. 4 to FIG. 9, the receiving module 1001 is configured to support the terminal device in performing step S403 in FIG. 4, steps S509 and S512 in FIG. 5B, steps S609 and S612 in FIG. 6B, steps S709 and S712 in FIG. 7B, step 801 in FIG. 8, step 901 in FIG. 9, and/or another process of the technology described in this specification. The processing module 1002 is configured to support the terminal device in performing steps S501, S510, S511, and S513 in FIG. 5A and FIG. 5B, steps S601, S610, S611, and S613 in FIG. 6A and FIG. 6B, and steps S701, S710, S711, and S713 in FIG. 7A and FIG. 7B, step S802 in FIG. 8, step S902 in FIG. 9, and/or another process of the technology described in this specification. The sending module is configured to support the terminal device in performing step S401 in FIG. 4, step S502a in FIG. 5A, step S602a in FIG. 6A, step S703a in FIG. 7A, and/or another process of the technology described in this specification.

All related content of the steps in the foregoing method embodiments may be cited in function descriptions of corresponding function modules. Details are not described herein again.

In this embodiment of this application, the apparatus is presented in a form in which function modules are obtained through division based on a corresponding to a function, or the apparatus is presented in a form in which the function modules are divided in an integrated manner. The "module" herein may include an application-specific integrated circuit (Application-Specific Integrated Circuit, ASIC), a circuit, a processor executing one or more software or firmware programs, a memory, an integrated logic circuit, or another component that can provide the foregoing function. In a simple embodiment, a person skilled in the art may figure out that the terminal device may be implemented by using the communications apparatus shown in FIG. 3. For example, the receiving module 1001 and the sending module 1003 in FIG. 10 may be implemented by the communications interface 304 in FIG. 3, and the processor 1002 may be implemented by the processor 301 or the processor 307 in FIG. 3. This is not limited in this embodiment of this application.

An embodiment of this application further provides a computer-readable storage medium, storing an instruction. When the computer-readable storage medium runs on the terminal device shown in FIG. 10, the terminal device is enabled to perform the methods for determining location information shown in FIG. 4 to FIG. 9 in the embodiments of this application.

Optionally, an embodiment of this application provides a chip system. The chip system includes a processor, configured to support a terminal device in implementing the methods shown in FIG. 4 to FIG. 9. In a possible design, the chip system further includes a memory. The memory is configured to store a program instruction and data that are necessary for the terminal device. Certainly, the memory may alternatively not exist in the chip system. The chip system may include a chip, or may include a chip and another discrete device. This is not specifically limited in this embodiment of this application.

When function modules are obtained through division based on a corresponding function, FIG. 11 shows a possible schematic structural diagram of a core network element in the foregoing embodiments. As shown in FIG. 11, the core network element includes a receiving module 1101, a processing module 1102, and a sending module 1103. The core network element may perform the following action 5, action 6, action 7, or action 8.

Action 5: The receiving module 1101 is configured to receive first location information of a terminal device via a non-3GPP access network element. The processing module 1102 is configured to determine, based on the first location information, second location information that is of the terminal device and that is corresponding to a 3GPP network. The sending module 1103 is configured to send the second location information to the terminal device via the non-3GPP access network element.

Optionally, the processing module 1102 is configured to determine, based on the first location information and a preset correspondence between the first location information and the second location information, second location information that is of the terminal device and that is corresponding to the 3GPP network.

Optionally, the sending module 1103 is configured to send the first location information to a third core network element. The receiving module 1101 is configured to receive the second location information sent by the third core network element.

Optionally, the sending module 1103 is further configured to send LADN information corresponding to the terminal device, to the terminal device, where the LADN information is used by the terminal device to determine a target LADN.

Optionally, the receiving module 1101 is configured to receive the first location information of the terminal device via the non-3GPP access network element before the terminal device completes access authentication.

Optionally, the receiving module 1101 is configured to receive the first location information of the terminal device via the non-3GPP access network element and a non-3GPP access network gateway before the terminal device completes access authentication. The sending module 1103 is configured to send the second location information to the terminal device via the non-3GPP access network element and the non-3GPP access network gateway.

Optionally, the receiving module 1101 is configured to receive the first location information of the terminal device via the non-3GPP access network element and a second core network element before the terminal device completes access authentication. The sending module 1103 is configured to send second location information to the terminal device via the non-3GPP access network element and the second core network element.

Optionally, the receiving module 1101 is configured to receive the first location information of the terminal device via the non-3GPP access network element after the terminal device completes access authentication.

Optionally, the receiving module 1101 is configured to receive the first location information of the terminal device via the non-3GPP access network element and a non-3GPP access network gateway after the terminal device completes access authentication. The sending module 1103 is configured to send the second location information to the terminal device via the non-3GPP access network element and the non-3GPP access network gateway.

Optionally, the receiving module 1101 is configured to receive first NAS signaling via the non-3GPP access network element and the non-3GPP access network gateway after the terminal device completes access authentication, where the first NAS signaling carries the first location information of the terminal device. The sending module 1103 is configured to send second NAS signaling to the terminal device via the non-3GPP access network element and the non-3GPP access network gateway, where the second NAS signaling carries the second location information.

Optionally, the first location information includes at least one of the following: wireless local area network identification information, longitude and latitude coordinate information, information about an IP address of the terminal device, and wireless local area network address information.

Optionally, the LADN information includes a list of tracking areas, and the list of tracking areas includes at least one piece of TAI information.

Action 6: The sending module 1103 is configured to send location information that is of a terminal device and that is corresponding to a 3GPP network, to the terminal device via a non-3GPP access network element. The sending module 1103 is further configured to send LADN information corresponding to the terminal device, to the terminal device.

Optionally, the receiving module 1101 is configured to receive the location information that is of the terminal device corresponding to the non-3GPP network and that is sent by the non-3GPP access network element. The processing module 1102 is configured to determine, based on the location information that is of the terminal device and that is corresponding to the non-3GPP network, location information that is of the terminal device and that is corresponding to a 3GPP network.

Optionally, the receiving module 1101 is configured to receive, via the non-3GPP access network element, the location information that is of the terminal device corresponding to the non-3GPP network and that is sent by the terminal device. The processing module is configured to determine, based on the location information that is of the terminal device and that is corresponding to the non-3GPP network, the location information that is of the terminal device and that is corresponding to the 3GPP network.

Optionally, the sending module 1103 is configured to send the location information that is of the terminal device and that is corresponding to the non-3GPP network, to a third core network element. The receiving module 1101 is configured to receive the location information that is of the terminal device corresponding to the 3GPP network and that is sent by the third core network element.

Optionally, the processing module 1102 is configured to determine, based on the location information that is of the terminal device and that is corresponding to the non-3GPP network and a preset correspondence between the location information of the non-3GPP network and the location information of the 3GPP network, the location information that is of the terminal device and that is corresponding to the 3GPP network.

Optionally, the location information that is of the terminal device and that is corresponding to the 3GPP network includes TAI information and/or CI information.

Optionally, the LADN information includes a list of tracking areas, and the list of tracking areas includes at least one piece of TAI information.

Action 7: The sending module 1103 is configured to send LADN information corresponding to a terminal device, to the terminal device via a non-3GPP access network element, where the LADN information is information about an LADN in a non-3GPP network, and the LADN information is used by the terminal device to determine a target LADN.

Optionally, the LADN information includes at least one of the following: a wireless local area network identifier list, a longitude and latitude coordinate list, a list of IP addresses, and a wireless local area network address list. The wireless local area network identifier list includes at least one piece of wireless local area network identification information. The longitude and latitude coordinate list includes at least one piece of longitude and latitude coordinate information. The list of IP addresses includes at least one piece of information about an IP address. The wireless local area network address list includes at least one piece of wireless local area network address information.

Action 8: The sending module 1103 is configured to send, via a 3GPP access network element when a terminal device accesses a core network via both the 3GPP access network element and a non-3GPP access network element, location information that is of the terminal device and that is corresponding to a 3GPP network and LADN information corresponding to the terminal device, to the terminal device.

Optionally, the location information that is of the terminal device and that is corresponding to the 3GPP network includes TAI information and/or CI information.

Optionally, the LADN information includes a list of tracking areas, and the list of tracking areas includes at least one piece of TAI information.

Specifically, in the methods shown in FIG. 4 to FIG. 9, the receiving module 1101 is configured to support the core network element in performing step S401 in FIG. 4, step S504 in FIG. 5A, step S605 in FIG. 6A, step S705 in FIG. 7A, step 801 in FIG. 8, step 901 in FIG. 9, and/or another process of the technology described in this specification. The processing module 1002 is configured to support the core network element in performing step S402 in FIG. 4, steps S505 and S506 in FIG. 5A, step S606 in FIG. 6A, step S706 in FIG. 7A, and/or another process of the technology described in this specification. The sending module 1103 is configured to support the core network element in performing step S403 in FIG. 4, steps S507 and S512 in FIG. 5B, steps S607 and S612 in FIG. 6B, steps S707 and S712 in FIG. 7B, step S801 in FIG. 8, step S901 in FIG. 9, and/or another process of the technology described in this specification.

All related content of the steps in the foregoing method embodiments may be cited in function descriptions of corresponding function modules. Details are not described herein again.

In this embodiment of this application, the apparatus is presented in a form in which function modules are obtained through division based on a corresponding function, or the apparatus is presented in a form in which the function modules are divided in an integrated manner. The "module" herein may include an application-specific integrated circuit (Application-Specific Integrated Circuit, ASIC), a circuit, a processor executing one or more software or firmware programs, a memory, an integrated logic circuit, or another component that can provide the foregoing function. In a simple embodiment, a person skilled in the art may figure out that the core network element may be implemented by using the communications apparatus shown in FIG. 3. For example, the receiving module 1101 and the sending module 1103 in FIG. 11 may be implemented by the communications interface 304 in FIG. 3, and the processor 1102 may be implemented by the processor 301 or the processor 307 in FIG. 3. This is not limited in this embodiment of this application.

An embodiment of this application further provides a computer-readable storage medium, storing an instruction. When the computer-readable storage medium runs on the core network element shown in FIG. 11, the core network element is enabled to perform the method for determining location information shown in FIG. 4 to FIG. 9 in the embodiments of this application.

Optionally, an embodiment of this application provides a chip system. The chip system includes a processor, configured to support a core network element in implementing the methods shown in FIG. 4 to FIG. 9. In a possible design, the chip system further includes a memory. The memory is configured to store a program instruction and data that are necessary for the core network element. Certainly, the memory may alternatively not exist in the chip system. The chip system may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to the embodiments, in a process of implementing this application that claims protection, persons skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to this application without departing from the spirit and scope of this application. Correspondingly, the specification and accompanying drawings are merely example description of this application defined by the accompanying claims, and is considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations provided that the modifications and variations of this application fall within the scope defined by the claims of this application and their equivalent technologies. This application is subject to the protection scope of the claims.

## Claims

1. A method for determining location information, comprising:
sending, by a terminal device, first location information to a first core network element via a non-third-generation partner project 3GPP access network element, wherein the first location information is used by the first core network element to determine second location information that is of the terminal device and that is corresponding to a 3GPP network; and
receiving, by the terminal device via the non-3GPP access network element, the second location information sent by the first core network element.

2. The method according to claim 1, further comprising:
receiving, by the terminal device, local area data network LADN information that corresponds to the terminal device and that is sent by the first core network element; and
determining, by the terminal device, a target LADN based on the second location information and the LADN information.

3. The method according to claim 1 or 2, further comprising:
determining, by the terminal device, a first non-3GPP access network gateway based on the second location information; and
accessing, by the terminal device, a LADN via the first non-3GPP access network gateway.

4. The method according to any one of claims 1 to 3, wherein the sending, by a terminal device, first location information to a first core network element via a non-3GPP access network element comprises:
sending, by the terminal device, the first location information to the first core network element via the non-3GPP access network element before access authentication is completed.

5. The method according to claim 4, wherein the sending, by the terminal device, the first location information to the first core network element via the non-3GPP access network element before access authentication is completed comprises:
sending, by the terminal device, the first location information to the first core network element via the non-3GPP access network element and a second non-3GPP access network gateway before access authentication is completed; and
the receiving, by the terminal device via the non-3GPP access network element, the second location information sent by the first core network element comprises:
receiving, by the terminal device via the non-3GPP access network element and the second non-3GPP access network gateway, the second location information sent by the first core network element.

6. The method according to claim 4, wherein the sending, by the terminal device, the first location information to the first core network element via the non-3GPP access network element before access authentication is completed comprises:
sending, by the terminal device, the first location information to the first core network element via the non-3GPP access network element and a second core network element before access authentication is completed; and
the receiving, by the terminal device via the non-3GPP access network element, the second location information sent by the first core network element comprises:
receiving, by the terminal device via the non-3GPP access network element and the second core network element, the second location information sent by the first core network element.

7. The method according to any one of claims 1 to 3, wherein the sending, by a terminal device, first location information to a first core network element via a non-3GPP access network element comprises:
sending, by the terminal device, the first location information to the first core network element via the non-3GPP access network element after access authentication is completed.

8. A method for determining location information, comprising:
receiving, by a first core network element, first location information of a terminal device via a non-third-generation partner project 3GPP access network element;
determining, by the first core network element based on the first location information, second location information that is of the terminal device and that is corresponding to a 3GPP network; and
sending, by the first core network element, the second location information to the terminal device via the non-3GPP access network element.

9. The method according to claim 8, wherein the determining, by the first core network element based on the first location information, second location information that is of the terminal device and that is corresponding to a 3GPP network comprises:
determining, by the first core network element based on the first location information and a preset correspondence between the first location information and the second location information, the second location information that is of the terminal device and that is corresponding to the 3GPP network.

10. The method according to claim 9, wherein the determining, by the first core network element based on the first location information, second location information that is of the terminal device and that is corresponding to a 3GPP network comprises:
sending, by the first core network element, the first location information to a third core network element; and
receiving, by the first core network element, the second location information sent by the third core network element.

11. The method according to any one of claims 8 to 10, further comprising:
sending, by the first core network element to the terminal device, local area data network LADN information corresponding to the terminal device, wherein the LADN information is used by the terminal device to determine a target LADN.

12. The method according to any one of claims 8 to 11, wherein the receiving, by a first core network element, first location information of a terminal device via a non-3GPP access network element comprises:
receiving, by the first core network element, the first location information of the terminal device via the non-3GPP access network element before the terminal device completes access authentication.

13. The method according to claim 12, wherein the receiving, by the first core network element, the first location information of the terminal device via the non-3GPP access network element before the terminal device completes access authentication comprises:
receiving, by the first core network element, the first location information of the terminal device via the non-3GPP access network element and a second core network element before the terminal device completes access authentication; and
the sending, by the first core network element, the second location information to the terminal device via the non-3GPP access network element comprises:
sending, by the first core network element, the second location information to the terminal device via the non-3GPP access network element and the second core network element.

14. The method according to any one of claims 8 to 11, wherein the receiving, by a first core network element, first location information of a terminal device via a non-3GPP access network element comprises:
receiving, by the first core network element, the first location information of the terminal device via the non-3GPP access network element after the terminal device completes access authentication.

15. A terminal device, comprising:
a sending module, configured to send first location information to a first core network element via a non-third-generation partner project 3GPP access network element, wherein the first location information is used by the first core network element to determine second location information that is of the terminal device and that is corresponding to a 3GPP network; and
a receiving module, configured to receive, via the non-3GPP access network element, the second location information sent by the first core network element.

16. The terminal device according to claim 15, wherein the terminal device further comprises a processing module; and
the receiving module is further configured to receive local area data network LADN information that corresponds to the terminal device and that is sent by the first core network element; and
the processing module is configured to determine a target LADN based on the second location information and the LADN information.

17. The terminal device according to claim 15 or 16, wherein
the processing module is further configured to: determine a first non-3GPP access network gateway based on the second location information; and access a LADN via the first non-3GPP access network gateway.

18. The terminal device according to any one of claims 15 to 17, wherein
the sending module is configured to send the first location information to the first core network element via the non-3GPP access network element before the terminal device completes access authentication.

19. The terminal device according to claim 18, wherein
the sending module is configured to send the first location information to the first core network element via the non-3GPP access network element and a second non-3GPP access network gateway before the terminal device completes access authentication; and
the receiving module is configured to receive, via the non-3GPP access network element and the second non-3GPP access network gateway, the second location information sent by the first core network element.

20. The terminal device according to claim 18, wherein
the sending module is configured to send the first location information to the first core network element via the non-3GPP access network element and a second core network element before the terminal device completes access authentication; and
the receiving module is configured to receive, via the non-3GPP access network element and the second core network element, the second location information sent by the first core network element.

21. The terminal device according to any one of claims 15 to 17, wherein
the sending module is configured to send the first location information to the first core network element via the non-3GPP access network element after the terminal device completes access authentication.

22. A core network element, comprising:
a receiving module, configured to receive first location information of a terminal device via a non-third-generation partner project 3GPP access network element;
a processing module, configured to determine, based on the first location information, second location information that is of the terminal device and that is corresponding to a 3GPP network; and
a sending module, configured to send the second location information to the terminal device via the non-3GPP access network element.

23. The core network element according to claim 22, wherein
the processing module is configured to determine, based on the first location information and a preset correspondence between the first location information and the second location information, the second location information that is of the terminal device and that is corresponding to the 3GPP network.

24. The core network element according to claim 22, wherein
the sending module is further configured to send the first location information to a third core network element; and
the receiving module is further configured to receive the second location information sent by the third core network element.

25. The core network element according to any one of claims 22 to 24, wherein
the sending module is further configured to send, to the terminal device, local area data network LADN information corresponding to the terminal device, wherein the LADN information is used by the terminal device to determine a target LADN.

26. The core network element according to any one of claims 22 to 25, wherein
the receiving module is configured to receive the first location information of the terminal device via the non-3GPP access network element before the terminal device completes access authentication.

27. The core network element according to claim 26, wherein
the receiving module is configured to receive first location information of the terminal device via the non-3GPP access network element and a second core network element before the terminal device completes access authentication; and
the sending module is configured to send the second location information to the terminal device via the non-3GPP access network element and the second core network element.

28. The core network element according to any one of claims 22 to 25, wherein
the receiving module is configured to receive the first location information of the terminal device via the non-3GPP access network element after the terminal device completes access authentication.

29. A computer-readable storage medium, storing an instruction, wherein when the instruction is run on a computer, the computer is enabled to perform the method for determining location information according to any one of claims 1 to 7.

30. A computer-readable storage medium, storing an instruction, wherein when the instruction is run on a computer, the computer is enabled to perform the method for determining location information according to any one of claims 8 to 14.
